Europäisches Patentamt

European Patent Office

Office européen des brevets

(11) Numéro de publication: **0 320 352 B1**

# FASCICULE DE BREVET EUROPEEN

(45) Date de publication de fascicule du brevet: **24.02.93** (51) Int. Cl.5: **G06F 15/336**, G06F 7/544

(21) Numéro de dépôt: **88403064.4**

(22) Date de dépôt: **05.12.88**

(54) **Circuit intégré de calcul numérique pour calculs glissants du type convolution.**

(30) Priorité: **08.12.87 FR 8717051**

(43) Date de publication de la demande:
**14.06.89 Bulletin 89/24**

(45) Mention de la délivrance du brevet:
**24.02.93 Bulletin 93/08**

(84) Etats contractants désignés:
**DE GB NL**

(56) Documents cités:
**DD-A- 219 315**
**FR-A- 2 384 303**
**FR-A- 2 586 312**

**ELECTRONICS, vol. 52, no. 26, décembre 1979, pages 109-115, New York, US; L. Schirm IV: "Packing a signal processor onto a single digital board"**

**IEE PROCEEDINGS, vol. 130, no. 5, part F, août 1983, pages 409-416, Old Woking, Surrey, GB; C.-S. Yeh et al.: "Parallel architectures for computing cyclic convolutions"**

**IEE PROCEEDINGS, vo. 127, no. 2, avril 19080, pages 99-106; S.S. Magar et al.: "Microprogrammable arithmetic element and**

**its applications to digital signal processing"**

(73) Titulaire: **THOMSON-CSF**
**51, Esplanade du Général de Gaulle**
**F-92800 Puteaux(FR)**

(72) Inventeur: **Elleaume, Philippe**
**THOMSON-CSF SCPI 19, avenue de Messine**
**F-75008 Paris(FR)**
Inventeur: **Prevost, Michel**
**THOMSON-CSF SCPI 19, avenue de Messine**
**F-75008 Paris(FR)**

(74) Mandataire: **Albert, Claude et al**
**THOMSON-CSF SCPI B.P. 329, 50, rue J.P. Timbaud**
**F-92402 COURBEVOIE CEDEX (FR)**

## Description

La présente invention se rapporte à un circuit intégré de calcul numérique destiné, notamment en traitement de signal numérique, aux calculs glissants du type convolution, de la forme $\sum_i C_i X_j$ avec $j = i + k$, j et k étant des entiers relatifs et i un entier naturel, où $C_i$ représente des coefficients complexes et $X_j$ des données, soit complexes, soit réelles.

Il existe de nombreuses applications mettant en oeuvre des calculs de ce type, par exemple dans le traitement des signaux radar et plus particulièrement pour la compression d'impulsion numérique et la démodulation amplitude-phase numérique.

On connaît des circuits intégrés de traitement de signal qui effectuent des calculs similaires. C'est le cas par exemple du processeur de signal IMS A100 de la société INMOS. Ce circuit est un bloc opérateur comprenant essentiellement un multiplieur accumulateur et qui peut servir de bloc de construction pour différentes applications et peut être aisément connecté en cascade.

Cependant, ce circuit connu a comme inconvénients que, d'une part, il a une puissance de calcul limitée insuffisante pour certaines applications et que, d'autre part, il n'est pas directement adapté au traitement de valeurs complexes. Pour pouvoir effectuer un tel traitement, il est nécessaire de prévoir des circuits annexes ce qui augmente le coût et nuit dans une certaine mesure aux performances.

Par ailleurs, un processeur de signal numérique comportant une pluralité de cellules à multiplieur-accumulateur est décrit dans l'article de L. SCHIRM IV "Packing a signal processor onto a single digital board" paru dans la revue ELECTRONICS, vol. 52, Nº 26, décembre 1979, pages 109-115. Mais ce processeur ne petit traiter que des valeurs réelles et non des valeurs complexes.

Un objet de l'invention est donc de remédier à ces inconvénients en prévoyant un circuit intégré capable d'effectuer des calculs glissants sur des grandeurs complexes et aisément cascadable.

L'invention est definie dans la revendication 1.

Selon l'invention, il est prévu un circuit intégré de calcul numérique destiné, notamment en traitement de signal numérique, aux calculs glissants du type convolution tel que défini dans les revendications.

Grâce à son architecture, un tel circuit peut être monté en cascade ce qui permet d'atteindre des profondeurs de convolution très importantes. La propagation des coefficients d'une cellule à l'autre permet de réduire notablement le temps de latence entre sorties de résultats valides, ce qui se traduit par des temps de réponse plus courts. Cette architecture permet donc des commutations instantanées d'un type de code à un autre, donc des traitements adaptatifs avec des performances améliorées.

L'invention sera mieux comprise et d'autres caractéristique et avantages apparaîtront à l'aide de la description ci-après et des dessins joints où :
- la figure 1 est un schéma par blocs du circuit selon l'invention ;
- la figure 2 est le schéma d'une cellule opératrice du circuit selon l'invention ;
- la figure 3 représente les diagrammes de signaux d'horloge et de commande utilisés dans le circuit de la figure 1 ;
- la figure 4 représente des diagrammes des entrées de coefficients et de données, soit complexes, soit réelles ;
- la figure 5 représente les diagrammes des signaux en divers points du circuit dans le cas de données complexes ; et
- la figure 6 montre des diagrammes de signaux aux mêmes points du circuit dans le cas de données réelles.

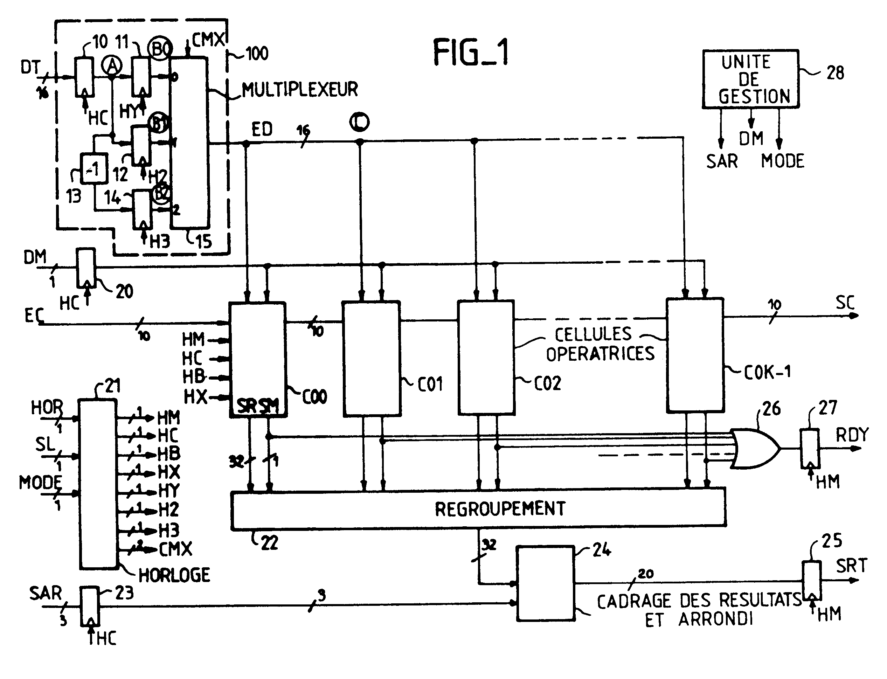

La figure 1 est un schéma général par blocs du circuit selon l'invention. Celui-ci comporte principalement K cellules opératrices identiques COO à COK-1. Ces cellules sont connectées en parallèle à l'entrée de données recevant les données DT, par l'intermédiaire d'un dispositif logique 100 qui assure la répartition dans le temps et la répétition éventuelle des données, comme on la verra ci-dessous.

Les coefficients complexes $C_i$ sont envoyés, par l'entrée EC, sur la première cellule COO où ils sont utilisés et retransmis avec un retard convenable vers la cellule suivante CO1 et ainsi de suite. Les coefficients se propagent donc d'une cellule à la suivante jusqu'à la sortie SC.

Chaque cellule comprend essentiellement un multiplieur et un additionneur accumulateur pour réaliser le calcul $\sum_i C_i X_j$ pour une valeur donnée de k ($j = i + k$) croissante d'une cellule à la suivante.

Les résultats sont fournis sur la sortie $\overline{SR}$ de la cellule et le résultat final est présent sur cette sortie lorsqu'un signal de validation est présent sur la sortie SM de la cellule. Les résultats fournis par toutes les cellules successivement sont regroupés par un circuit de regroupement 22, commandé par les signaux de validation des diverses cellules. Ce circuit 22 fournit donc la suite des résultats validés à un circuit de cadrage des résultats et d'arrondi 24 qui sélectionne le cadrage des résultats, sous la commande d'un signal SAR, en fonction du gain d'intégration envisagé, c'est-à-dire du nombre de multiplications élémentaires effectuées dans une cellule. Le signal SAR est transmis au circuit 24 par l'intermédiaire d'un registre de transfert 23 commandé par un signal d'horloge HC. Les résultats cadrés et arrondis sont transmis sur une sortie SRT par l'intermédiaire d'un registre de transfert 25 commandé par un signal d'horloge HM. Pour permettre la connexion en cascade de plusieurs circuits selon la figure 1, un signal "sortie des résultats prête" est fourni sur la sortie RDY. Ce signal est actif tant que des résultats sortent sur la sortie SRT. Ce signal est le signal de sortie d'une porte OU 26 recevant les signaux de validation des sorties SM de toutes les cellules opératrices, le signal de sortie de la porte OU étant transmis par l'intermédiaire d'un registre 27, commandé par le signal d'horloge HM.

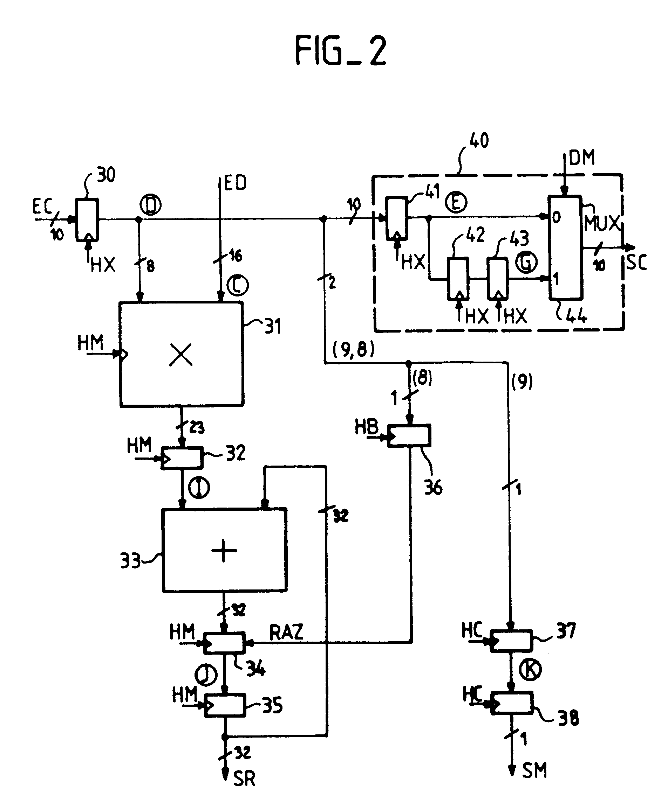

Une entrée DM permet d'appliquer un signal de décimation au circuit selon l'invention par l'intermédiaire d'un registre 20 commandé par le signal d'horloge HC. En effet, dans certains cas, la fourniture des résultats correspondant à tous les points de calcul peut représenter une charge trop importante pour les circuits d'utilisation qui suivent. Pour adapter cette charge sans perdre de précision et sans que le circuit selon l'invention présente d'éléments inutilisés, il est prévu de jouer sur le retard de transmission des coefficients d'une cellule à la suivante, pour supprimer un point de calcul sur deux. Ceci est obtenu en appliquant le signal de décimation en parallèle à toutes les cellules opératrices, comme on le verra ci-dessous en liaison avec la figure 2.

Un circuit d'horloge 21 fournit les différents signaux nécessaires sous la commande d'un signal de mode (données complexes/données réelles). Ce circuit d'horloge est synchronisé par des signaux extérieurs HOR (horloge de base) et SL (synchronisation lente). Les signaux de commande SAR, DM et MODE sont fournis par exemple par une unité de gestion 28.

Enfin, le dispositif logique 100 comporte des registres de transfert 10, 11, 12, 14 commandés respectivement par les signaux d'horloge HC, HY, H2, H3, un circuit 13 de multiplication par -1 et un multiplexeur 15 à trois entrées commandé par un signal CMX.

La figure 2 représente le schéma d'une cellule opératrice. Une telle cellule comporte essentiellement un multiplieur 31, commandé par le signal d'horloge HM, un additionneur 33, un registre accumulateur 34, commandé par le signal d'horloge HM, et un deuxième registre 35, commandé par le même signal d'horloge HM, qui est inséré à la suite du registre 34 dans la boucle de l'accumulateur. Un registre 32 commandé par le signal d'horloge HM est ici inséré entre le multiplieur et l'additionneur. Bien entendu, ce registre pourrait être supprimé ou disposé au sein du multiplieur 31 ; on peut aussi disposer plusieurs registres similaires à l'intérieur du multiplieur 31 et de l'additionneur 33 (pour permettre le traitement pipeline). Les entrées du multiplieur 31 reçoivent d'une part les données ED transmises par le dispositif logique 100 (figure 1) et, d'autre part, par l'intermédiaire d'un registre 30 commandé par le signal d'horloge HX, les coefficients venant de l'entrée EC. La sortie SR de la cellule est constituée par la sortie du registre 35.

En fait, le bus de transmission des coefficients venant de l'entrée EC comporte deux conducteurs supplémentaires. Ainsi ce bus comporte, par exemple, dans le cas représenté, huit conducteurs pour transmettre huit bits représentant la valeur du coefficient et deux conducteurs supplémentaires transmettant respectivement un bit (bit 8) de remise à zéro RAZ et un bit (bit 9) permettant l'élaboration du signal de validation des résultats.

Les bits 0 à 7 sont donc appliqués au multiplieur 31, le bit 8 est appliqué comme signal de remise à zéro RAZ du registre 34, par l'intermédiaire d'un registre 36 commandé par le signal d'horloge HB, et le bit 9 constitue le signal de validation sur la sortie SM, après passage dans deux registres successifs 37 et 38 commandés par le signal d'horloge HC.

Par ailleurs, les coefficients et les deux bits supplémentaires sont transférés sur la sortie SC par l'intermédiaire d'un circuit de transfert 40 commandé par le signal de décimation DM. Ce circuit de transfert comprend un registre d'entrée 41 commandé par le signal d'horloge HX et un multiplexeur 44 à deux entrées dont l'une, référencée 0, est reliée directement à la sortie du registre 41 et dont l'autre, référencée 1, est reliée au registre 41 par l'intermédiaire de deux registres 42 et 43 en série, commandés par le signal d'horloge HX. Le multiplexeur 44 est commandé par le signal de décimation DM.

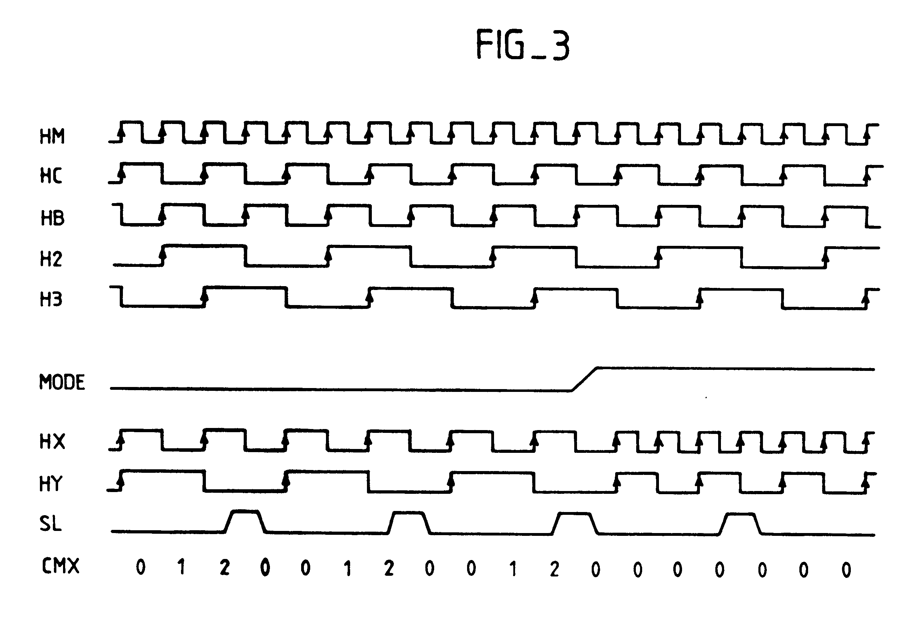

Le fonctionnement de l'ensemble va être expliqué en se référant aux figures 1 et 2 et également aux signaux représentés sur les figures 3 à 6 qui montrent des signaux en différents points du circuit identifiés par des lettres encerclées.

Le fonctionnement est basé sur la décomposition classique :

$$\sum_i C_i \, X_{i+k} = \sum_i (A_i + jB_i)(R_{i+k} + jI_{i+k})$$

$$= \sum_i [A_i R_{i+k} - B_i I_{i+k}] + j \sum_i [A_i I_{i+k} + B_i R_{i+k}] \quad (1)$$

et sur l'utilisation alternative du multiplieur et de l'additionneur accumulateur de chaque cellule pour le calcul et l'addition des produits partiels respectivement réels et imaginaires.

La figure 3 représente les différents signaux d'horloge et le signal de commande CMX en fonction de l'état du signal MODE. Les signaux HM, HC, HB, H2, H3 ont toujours la même fréquence quel que soit le signal MODE.

Ce signal est à l'état bas lorsque les données fournies sur l'entrée DT du circuit sont sous forme complexe et est à l'état haut lorsque ces données sont réelles.

Les signaux d'horloge HX et HY ont une fréquence double lorsque les données traitées sont réelles.

Le signal SL est un signal dit de synchronisation lente qui fournit la synchronisation des données entrantes successives, l'entrée DT recevant successivement la partie réelle puis la partie imaginaire de chaque donnée si celles-ci sont complexes et chaque donnée successivement si celles-ci sont réelles.

Le signal CMX à deux bits est tel que, pour chaque donnée complexe, le multiplexeur 15 sélectionne successivement ses entrées 0, 1, 2 et 0 et que, pour des données réelles, l'entrée 0 soit constamment sélectionnée.

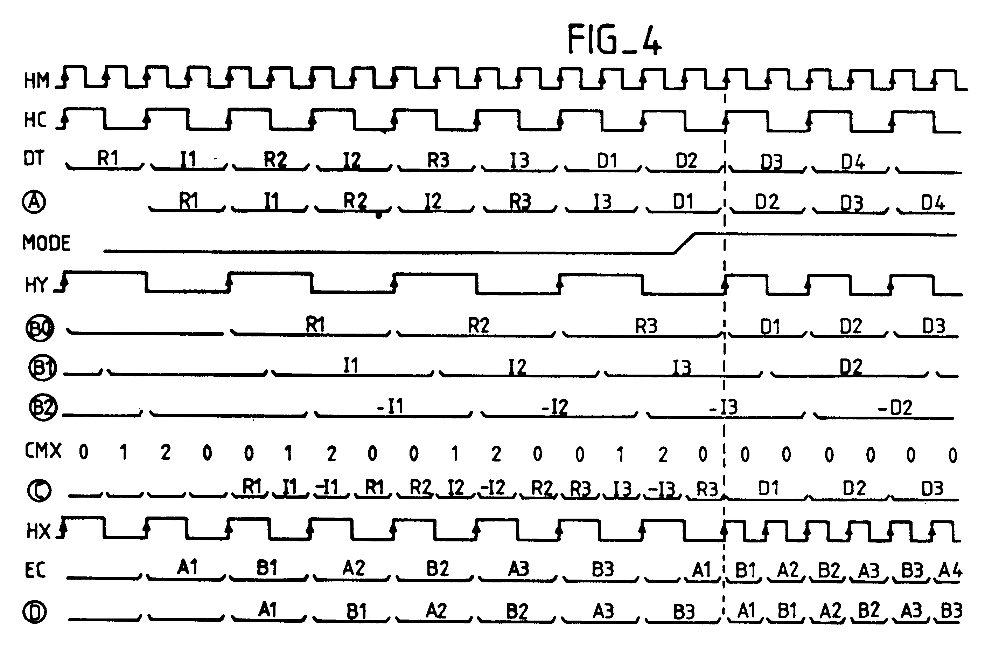

La figure 4 représente les diagrammes des entrées de coefficients et de données soit complexes soit réelles. On y retrouve les signaux d'horloge HM, HC, HY, HX, le signal MODE et le signal de commande CMX.

Dans le cas de données complexes, l'entrée DT reçoit successivement les parties réelle et imaginaire de chaque donnée R1, I1, R2, I2 ... à un rythme qui est la moitié de la fréquence d'horloge HM et en phase avec l'horloge HC. Au point A, après passage dans le registre 10, on retrouve les mêmes valeurs décalées d'une période d'horloge HC.

En B0, après passage dans le registre 11 commandé par le signal d'horloge HY dont la période est double de celle de HC, on ne retrouve que les parties réelles successives R1, R2 .... En B1, après passage dans le registre 12 commandé par le signal d'horloge H2 de même période que HY mais décalé d'une période de HM, on ne retrouve que les parties imaginaires successives I1, I2 ... En B2, après passage dans le multiplicateur 13 par -1 et le registre 14 commandé par le signal d'horloge H3 de même période que H2 mais décalé d'une période de HM, on ne retrouve que les valeurs successives -I1, -I2, ...

Les données ED au point C sont donc constituées par la succession R1, I1, -I1, R1, R2, I2, -I2, R2, ... au rythme de l'horloge HM.

Par ailleurs, les coefficients appliqués sur l'entrée EC se retrouvent au point D au rythme de l'horloge HX( = HC), sous forme de la succession des parties réelles et imaginaires A1, B1, A2, B2 ...

Par contre dans le cadre de données réelles, (partie droite de la figure 4), les signaux d'horloge HY et HX ont une fréquence double et l'entrée O du multiplexeur 15 est constamment sélectionnée. On retrouve donc au point C la succession des données réelles D1, D2 .. au rythme de l'horloge HY ( = HC) et au point C la succession des parties réelles et imaginaires des coefficients A1, B1, A2, B2 ... à un rythme double, celui de l'horloge HX ( = HM).

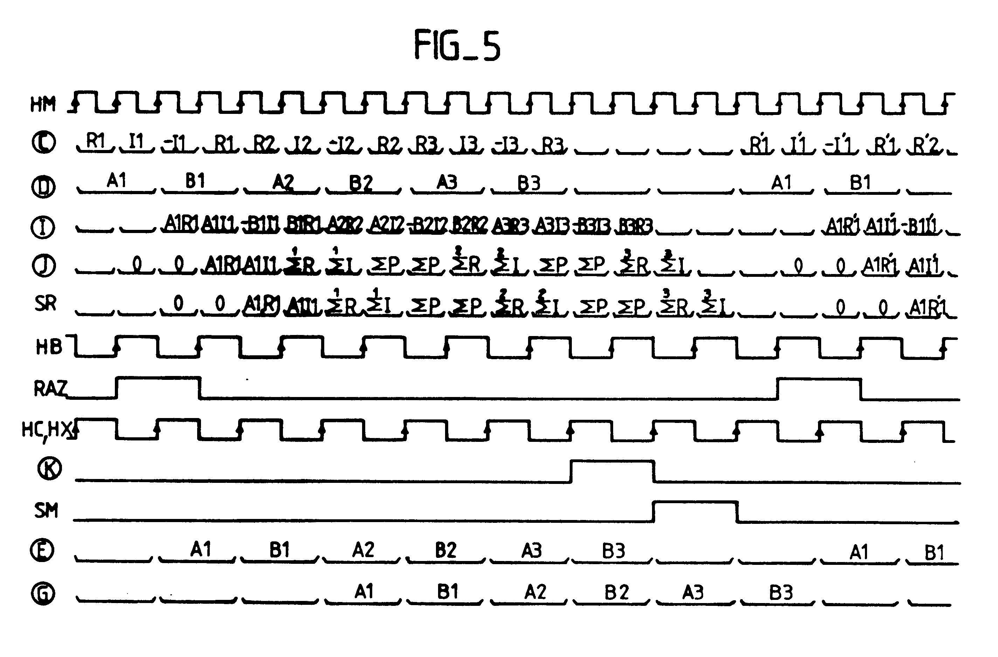

La figure 5 représente les diagrammes de signaux en divers points d'une cellule opératrice, par exemple la première COO, dans le cas de données complexes. Le multiplieur 31 fonctionnant au rythme de l'horloge HM fournit (point I) successivement et alternativement les produits partiels pour l'obtention des parties réelles et imaginaires du calcul selon la relation (1). Pour permettre cette obtention, il faut additionner ensemble les produits partiels de la partie réelle, donc un sur deux des produits partiels, et ceux de la partie imaginaire, c'est-à-dire effectuer ces opérations de manière imbriquée. Ceci est réalisé grâce au registre 35 qui ajoute un retard d'une période d'horloge HM dans la boucle de l'additionneur accumulateur. Sur les diagrammes aux points J et SR, on a appelé $\Sigma R$ les sommes de parties réelles et $\Sigma I$ les sommes de parties imaginaires significatives, c'est-à-dire correspondant à des étapes complètes de calcul, le chiffre au-dessus du signe $\Sigma$ correspondant au numéro de l'étape, et par P toutes les sommes intermédiaires sans signification. On voit que le résultat final, ici $\overset{3}{\Sigma} R$ et $\overset{3}{\Sigma} I$, apparaît sur la sortie SR deux périodes d'horloge HC après l'apparition de la partie imaginaire B3 du dernier coefficient au point D. On envoie le bit de validation de résultat (bit 9) en même temps que cette partie imaginaire B3 sur le bus des coefficients et on le retarde de deux périodes de HC au sein de la cellule grâce aux registres 37 et 38.

De même, la remise à zéro RAZ du registre 34 doit avoir lieu juste avant l'inscription dans ce registre du premier produit partiel A1R1. Le bit 8 commandant cette remise à zéro est donc envoyé en même temps que la partie réelle A1 du premier coefficient et est synchronisé au sein de la cellule sur l'horloge HB grâce au registre 36.

Les coefficients et les bits supplémentaires sont transmis vers la sortie SC, et donc vers la cellule suivante, par le circuit de transfert 40 (voir diagrammes en E et G de la figure 5).

Si on est en fonctionnement normal, sans décimation, le multiplexeur 44 sélectionne son entrée O (figure 2). Les coefficients sont appliqués à l'entrée du multiplieur 31 de la cellule suivante CO1 avec un retard de deux périodes d'horloge HX par rapport au point D de la cellule COO, en raison du registre 41 du circuit 40 et du registre 30 de la cellule suivante. Cette cellule effectuera donc le calcul $\sum_i C_i X_{i+k}$ pour la valeur $k = 1$ et ainsi de suite pour les différentes cellules. Grâce à cette propagation des coefficients d'une cellule à la suivante en cours de calcul, on obtient une réduction très importante des temps morts entre résultats valides dus au temps de latence des circuits (temps qui sépare l'entrée des coefficients et le début de la sortie des résultats valides). Cet avantage est très important pour la réalisation de traitements adaptatifs à temps de réponse plus court.

Si le signal de décimation DM est actif, le multiplexeur 44 sélectionne son entrée 1. Les coefficients sont appliqués à l'entrée du multiplieur 31 de la cellule suivante CO1 avec un retard de quatre périodes d'horloge HX par rapport au point D de la cellule COO, en raison des registres 41 à 43 du circuit 40 et du registre 30 de la cellule suivante. La cellule CO1 effectuera donc les calculs $\sum_i C_i X_{i+k}$ pour la valeur $k = 2$, et non $k = 1$ comme dans le cas précédent. Ainsi les cellules opératrices effectuent les calculs pour des valeurs de $k$ croissant de deux en deux et non pour toutes les valeurs de $k$. On divise donc par deux le nombre de résultats valides à traiter par les circuits utilisateurs. Cette décimation s'effectue sans qu'il y ait de cellules inutilisées et sans qu'on diminue le nombre de coefficients et de données utilisés.

La décimation est donc faite sans aucune réduction de précision dans les calculs sur les points conservés.

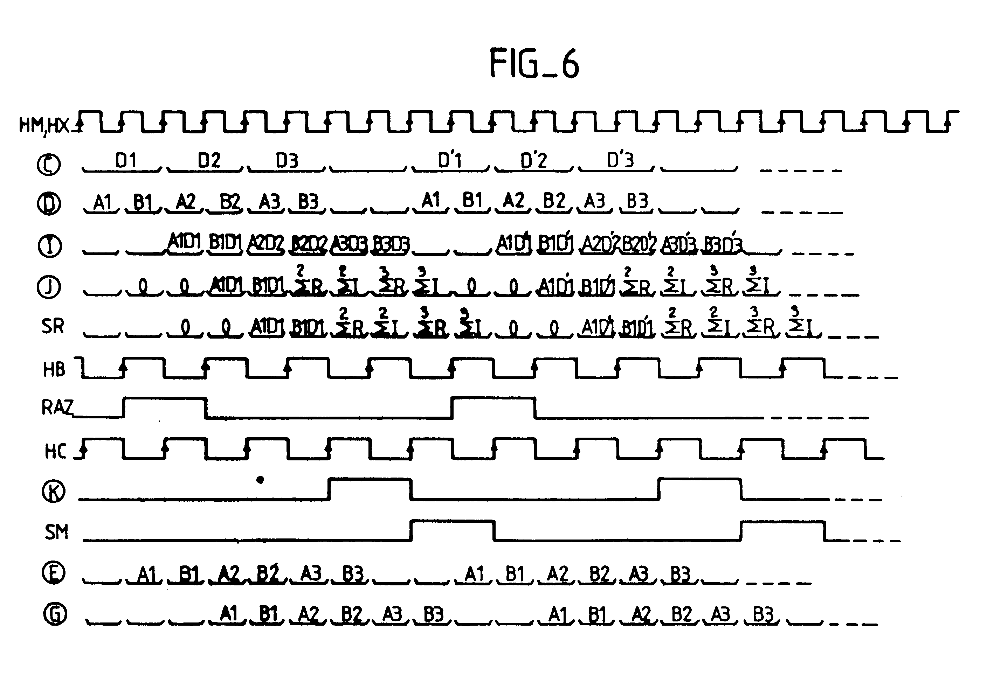

La figure 6 représente les diagrammes de signaux en divers points d'une cellule opératrice, par exemple la première COO, dans le cas de données réelles. Grâce à la multiplication par deux des fréquences des horloges HY (agissant sur le transfert des données sur l'entrée O du multiplexeur 15 dans le dispositif logique 100 de la figure 1) et HX (agissant sur l'entrée des coefficients dans chaque cellule) et à la sélection constante de l'entrée O du multiplexeur 15, on obtient coïcidence dans le temps entre chaque donnée successive et les parties réelle et imaginaire d'un coefficient correspondant. Le fonctionnement de chaque cellule est le même que celui indiqué précédemment en liaison avec la figure 5. Ainsi, sans modification, importante, sinon une adaptation du circuit d'horloge 21 à la commande MODE qui est évidente pour tout technicien, le circuit selon l'invention peut aussi bien traiter des données réelles que complexes.

On doit noter que, dans le circuit de calcul numérique selon l'invention, les résultats venant de chaque cellule opératrice sont, en raison de la propagation des coefficients d'une cellule à la suivante, présents séquentiellement aux entrées du circuit de regroupment 22 qui n'a pas besoin d'être un multiplexeur mais plutôt un simple jeu de portes commandées par les signaux de validation des sorties SM des cellules. Cette apparition en séquence temporelle des résultats sur la sortie du circuit 22 a l'avantage de permettre l'utilisation d'un circuit unique 24 de cadrage des résultats et d'arrondi (et non pas un circuit par cellule). Ainsi qu'on l'a déjà indiqué le cadrage des résultats est commandé en fonction du nombre de multiplications effectuées par chaque cellule, c'est-à-dire du nombre de coefficients et de données utilisés pour le calcul dans une cellule. Ces paramètres sont déterminés à l'avance et l'unité de gestion 28 peut donc fournir un signal de commande SAR, ici à trois bits. Le circuit 24 permet de passer de résultats donnés par exemple sur trente-deux bits à des résultats arrondis donnés par exemple sur vingt bits.

Comme on le voit, les circuits de calcul numérique selon l'invention sont cascadables sans difficulté grâce aux sorties SC, RDY et SRT. On peut donc atteindre aisément de très importantes profondeurs de convolution. En transmettant en même temps que les coefficients les signaux de commande des cellules opératrices par deux conducteurs supplémentaires du bus des coefficients, on obtient un système de validation des résultats et de remise à zéro extrêmement simplifié.

Il est clair que, puisque l'on opère sur des valeurs complexes, il faut que les circuits de calcul soient synchronisés par rapport aux paires partie réelle-partie imaginaire des valeurs d'entrée. Ceci est réalisé grâce au signal de synchronisation lente SL qui vient synchroniser le circuit d'horloge 21.

Bien entendu, l'exemple de réalisation décrit n'est en rien limitatif de l'invention et en particulier les nombres de bits donnés sur les liaisons dans les différentes figures ne sont que de simples exemples.

**Revendications**

1. Circuit intégré de calcul numérique destiné, notamment en traitement de signal numérique, aux calculs glissants du type convolution, de la forme $\sum_i C_i X_j$ avec $j = i + k$, $j$ et $k$ étant des entiers relatifs et $i$ un nombre entier naturel, où $C_i$ représente des coefficients complexes et $X_j$ des données, soit complexes, soit réelles, ledit circuit étant characterisé en ce qu'il comporte une pluralité de cellules opératrices (COO à COK-1), qui comprennent chacune un multiplieur (31) suivi d'un additionneur (33) et d'un registre accumulateur (34) pour effectuer chacune les calculs correspondant à une valeur différente de k, en ce que chaque cellule opératrice comprend un second registre (35), inséré dans la boucle de l'additionneur accumulateur à la suite du registre accumulateur (34), pour assurer le traitement alternatif au rythme d'horloge des portions réelle et imaginaire du calcul, en ce que les parties réelle et imaginaire (A1, B1 ; A2, B2 ...) de chaque coefficient sont envoyées à la suite à la première cellule opératrice (COO) où elles sont appliquées, d'une part, à une première entrée du multiplieur (31) et, d'autre part, à un circuit à retard (40) pour être retransmises avec un retard adéquat à la cellule suivante (CO1), lesdits coefficients se propageant ainsi de chaque cellule à la suivante, et en ce que ledit circuit comporte en outre un dispositif logique (100) recevant les données (DT) et différents signaux d'horloge (HC, HY, H2, H3) pour assurer la répartition temporelle et la répétition des parties réelle et imaginaire desdites données et pour envoyer simultanément chaque partie réelle ou imaginaire desdites données vers une seconde entrée du multiplicateur (31) de chacune desdites cellules opératrices, de manière à permettre aux multiplieurs de chaque cellule de fournir successivement et de manière alternée les produits partiels réels et imaginaires du calcul, un circuit de regroupement (22) des résultats des calculs par les diverses cellules opératrices, commandé par des signaux de validation correspondants desdits résultats élaborés par lesdites cellules respectives, et un circuit unique (24) de cadrage des résultats et d'arrondi, recevant du circuit de regroupement successivement les résultats des diverses cellules et commandé par un signal de commande (SAR) élaboré en fonction du nombre des multiplications élémentaires effectuées par chaque cellule.

2. Circuit intégré de calcul numérique selon la revendication 1, caractérisé en ce que le bus de propagation des coefficients (EC, SC) comporte deux fils supplémentaires dont le premier (bit 8) transmet à chaque cellule un bit de remise à zéro (RAZ) du registre accumulateur (34) et dont le second (bit 9) permet l'élaboration par chaque cellule dudit signal de validation (SM) du résultat des calculs de la cellule.

3. Circuit intégré de calcul numérique selon l'une des revendications 1 ou 2, caractérisé en ce que ledit dispositif logique (100) comprend un multiplexeur à trois entrées (15) et des registres de transfert (10, 11, 12, 14) commandés par des signaux d'horloge respectifs (HC, HY, H2, H3) et un circuit de multiplication par -1 (13) pour transférer, dans le cas de données complexes, sur les trois entrées du multiplexeur respectivement les parties réelles les parties imaginaires et l'opposé des parties imaginaires des données d'entrée (DT), ledit multiplexeur étant commandé par un signal (CMX) sélectionnant pour chaque donnée successivement la prémière, la deuxième, la troisième puis la première entrée, et en ce que, dans le cas de données réelles, le signal de commande (CMX) du multiplexeur sélectionne toujours la première entrée.

4. Circuit intégré de calcul numérique selon l'une quelconque des revendications 1 à 3, caractérisé en ce que chaque cellule comprend en outre un circuit de transfert (40), inséré à la sortie de propagation des coefficients (SC) et commandé par un signal de commande (DM), pour assurer soit le transfert normal des coefficients de manière que les calculs soient effectués pour toutes les valeurs de $\bar{k}$ successives, soit le transfert des coefficients avec un retard prédéterminé de manière que les $\bar{k}$alculs soient effectués seulement pour une valeur de $\bar{k}$ sur deux.

5. Circuit intégré de calcul numérique selon l'une quelconque des revendications 1 à 4, caractérisé en ce que les signaux d'horloge (HM, HB, HC, H2, H3, HX, HY) sont fournis aux différentes parties dudit circuit intégré de calcul numérique par un circuit d'horloge (21) qui comprend des moyens pour modifier la fréquence de certains de ces signaux d'horloge (HX, HY) selon le mode de fonctionnement, données complexes ou données réelles dudit circuit intégré, ces signaux d'horloge de fréquence modifiable (HX, HY) étant adressés d'une part aux registres de transfert (11) sur la première entrée du multiplieur dudit dispositif logique (100) et d'autre part au circuit de transfert (40) des coefficients de chaque cellule opératrice.

**Claims**

1.  Integrated circuit for digital calculation intended, especially in digital signal processing, for moving calculations of the convolution type, of the form $\Sigma_i\ C_i\ X_j$ with $j = i + k$, $j$ and $k$ being rational integers and $i$ a natural integer number, where $C_i$ represents complex coefficients and $X_j$ data, either complex or real, the said circuit being characterised in that it comprises a plurality of operator cells (COO to COK-1), each of which comprises a multiplier (31) followed by an adder (33) and by an accumulator register (34) for each to perform the calculations corresponding to a different value of k, in that each operator cell comprises a second register (35), inserted into the loop of the accumulator adder following the accumulator register (34), for carrying out the alternating processing, at the clock rate, of the real and imaginary portions of the calculation, in that the real and imaginary parts (A1, B1; A2, B2...) of each coefficient are sent one after the other to the first operator cell (COO) where they are applied, on the one hand, to a first input of the multiplier (31) and, on the other hand, to a delay circuit (40) in order to be retransmitted with a suitable delay to the following cell (CO1), the said coefficients thus propagating from each cell to the next, and in that the said circuit further comprises a logic device (100) receiving the data (DT) and various clock signals (HC, HY, H2, H3) in order to carry out the time distribution and the repetition of the real and imaginary parts of the said data and to simultaneously send each real or imaginary part of the said data to a second input of the multiplier (31) of each of the said operator cells, in such a way as to permit the multipliers of each cell to provide, successively and alternately, the real and imaginary partial products of the calculation, a regrouping circuit (22) for the results of the calculations by the various operator cells, controlled by corresponding signals for the validation of the said results produced by the said respective cells, and a single circuit (24) for alignment of the results and for rounding, receiving, from the regrouping circuit, successively, the results from the various cells and controlled by a control signal (SAR) produced as a function of the number of the elementary multiplications performed by each cell.

2.  Integrated circuit for digital calculation according to Claim 1, characterised in that the bus for propagation of the coefficients (EC, SC) comprises two additional wires, the first of which (bit 8) transmits, to each cell, a zero-reset bit (RAZ) for the accumulator register (34) and the second of which (bit 9) allows the production, by each cell, of the said signal (SM) for the validation of the result of the calculations of the cell.

3.  Integrated circuit for digital calculation according to one of Claims 1 or 2, characterised in that the said logic device (100) comprises a three-input multiplexer (15) and transfer registers (10, 11, 12, 14) controlled by respective clock signals (HC, HY, H2, H3) and a circuit for multiplication by -1 (13) for transferring, in the case of complex data, to the three inputs of the multiplexer, respectively the real parts, the imaginary parts and the inverse of the imaginary parts of the input data (DT), the said multiplexer being controlled by a signal (CMX) selecting, for each data item, successively the first, the second, the third then the first input, and in that, in the case of real data, the control signal (CMX) of the multiplexer always selects the first input.

4.  Integrated circuit for digital calculation according to any one of Claims 1 to 3, characterised in that each cell further comprises a transfer circuit (40), inserted at the output for propagation of the coefficients (SC) and controlled by a control signal (DM), in order to carry out either normal transfer of the coefficients in such a way that the calculations are performed for all the successive values of k, or the transfer of the coefficients with a predetermined delay in such a way that the calculations are performed only for every second value of k.

5.  Integrated circuit for digital calculation according to any one of Claims 1 to 4, characterised in that the clock signals (HM, HB, HC, H2, H3, HX, HY) are supplied to the various parts of the said integrated circuit for digital calculation by a clock circuit (21) which comprises means for modifying the frequency of some of these clock signals (HX, HY) according to the operating mode, complex data or real data, of the said integrated circuit, these modifiable-frequency clock signals (HX, HY) being addressed, on the one hand, to the transfer registers (11) on the first input of the multiplier of the said logic device (100) and, on the other hand, to the transfer circuit (40) for the coefficients of each operator cell.

**Patentansprüche**

**1.** Integrierte digitale Rechenschaltung, insbesondere auf dem Gebiet der digitalen Signalverarbeitung bestimmt für Gleitkommaberechnungen vom Typ der Faltung der Form $\sum_i C_i X_j$ mit $j = i + k$, wobei j und k relative ganze Zahlen sind und i eine ganze natürliche Zahl ist und wobei $C_i$ komplexe Koeffizienten und $X_j$ komplexe oder reelle Daten darstellen, wobei die Schaltung dadurch gekennzeichnet ist, daß sie mehrere Operationszellen (COO bis COK-1) enthält, die jeweils ein Multiplizierglied (31) gefolgt von einem Addierglied (33) und einem Akkumulatorregister (34) aufweisen, um jede der Berechnungen mit einem anderen Wert von k durchzuführen, daß jede Operationszelle ein zweites Register (35) enthält, das in die Schleife des Additionsglieds im Anschluß an das Akkumulatorregister (34) eingefügt ist, um die Verarbeitung abwechselnd im Taktrhythmus der Realteile und der Imaginärteile der Rechnung durchzuführen, daß die Realteile und die Imaginärteile (A1, B1; A2, B2 ...) jedes Koeffizienten nacheinander zur ersten Operationszelle (COO) geschickt werden, in der sie einerseits an einen ersten Eingang des Multiplizierglieds (31) und andererseits an eine Verzögerungsschaltung (40) angelegt werden, damit sie mit einer entsprechenden Verzögerung zur nächsten Zelle (CO1) weiterübertragen werden, wobei sich die Koeffizienten auf diese Weise von jeder Zelle zur nächsten weiterbewegen, daß die Schaltung ferner eine Logikvorrichtung (100) enthält, die die Daten (DT) und verschiedene Taktsignale (HC, HY, H2, H3) empfangen, um die zeitliche Verteilung und die Wiederholung der Realteile und der Imaginärteile der Daten zu gewährleisten und um gleichzeitig jedem Realteil oder jedem Imaginärteil der Daten zu einem zweiten Eingang des Multiplizierglieds (31) jeder der Operationszellen zu übertragen, damit die Multipliziereinheiten jeder Zelle hintereinander und abwechselnd die reellen und die imaginären Teilergebnisse der Berechnung liefern können, ferner eine Umgruppierungsschaltung (22) zum Umgruppieren der Ergebnisse der Berechnungen durch die verschiedenen Operationszellen enthält, die durch entsprechende Bestätigungssignale der von den jeweiligen Zellen erarbeiteten Ergebnisse gesteuert werden, und eine besondere Schaltung (24) zum Normieren und Runden enthält, die von der Umgruppierungsschaltung nacheinander die Ergebnisse der verschiedenen Zellen empfängt und von einem Steuersignal (SAR) gesteuert wird, das in Abhängigkeit von der Anzahl der von jeder der Zellen durchgeführten Elementarmultiplikationen erzeugt wird.

**2.** Integrierte digitale Rechenschaltung nach Anspruch 1, dadurch gekennzeichnet, daß der Übertragungsbus der Koeffizienten (EC, SC) zwei zusätzliche Adern enthält, von denen die erste (Bit 8) zu jeder Zelle ein Nullstellbit (RAZ) des Akkumulatorregisters (34) überträgt, und von denen die zweite (Bit 9) die Erzeugung des Bestätigungssignals (SM) des Ergebnisses der Berechnungen der Zelle für jede Zelle gestattet.

**3.** Integrierte digitale Rechenschaltung nach einem der Ansprüche 1 oder 2, dadurch gekennzeichnet, daß die Logikvorrichtung (100) einen Multiplexer (15) mit drei Eingängen und Übertragungsregister (10, 11, 12, 14) enthält, die von jeweiligen Taktsignalen (HC, HY, H2, H3) gesteuert werden sowie eine Multiplikationsschaltung (13) mit dem Faktor -1, um für den Fall komplexer Daten an die drei Eingänge des Multiplexers die Realteile, die Imaginärteile bzw. das entgegengesetzte zu den Imaginärteilen der Eingangsdaten (DT) anzulegen, wobei der Multiplexer von einem Signal (CMX) gesteuert wird, das für jeden aufeinanderfolgenden Datenwert den ersten, den zweiten, den dritten und dann den ersten Eingang auswählt, und daß für den Fall reeller Daten das Steuersignal (CMX) des Multiplexers immer den ersten Eingang auswählt.

**4.** Integrierte digitale Rechenschaltung nach einem der Ansprüche 1 bis 3, dadurch gekennzeichnet, daß jede Zelle ferner eine Übertragungsschaltung (40) enthält, die am Koeffizientenübertragungsausgang (SC) eingefügt ist und durch ein Steuersignal (DM) gesteuert wird, damit entweder das normale Übertragen der Koeffizienten in der Weise, daß die Berechnungen für alle aufeinanderfolgenden Werte von k durchgeführt werden, oder die Übertragung von Koeffizienten mit einer vorbestimmten Verzögerung in der Weise, daß die Berechnungen allein für einen von zwei Werten von k durchgeführt werden, gewährleistet wird.

**5.** Integrierte digitale Rechenschaltung nach einem der Ansprüche 1 bis 4, dadurch gekennzeichnet, daß die Taktsignale (HM, HB, HC, H2, H3, HX, HY) an verschiedene Teile der integrierten digitalen Rechenschaltung durch eine Taktschaltung (21) geliefert werden, die Mittel zum Modifizieren der Frequenz einiger dieser Taktsignale (HX, HY) entsprechend der Betriebsart mit komplexen oder mit reellen Daten der integrierten Schaltung enthält, wobei diese Taktsignale (HX, HY) mit veränderlicher Frequenz einerseits an die Übertragungsregister (11) an einem ersten Eingang der Multipliziereinheit der Logikvorrichtung (100) und andererseits an die Koeffizientenübertragungsschaltung (40) jeder Operationszelle adressiert werden.

FIG_1

CELLULES OPERATRICES

MULTIPLEXEUR

UNITE DE GESTION

SAR    MODE

REGROUPEMENT

HORLOGE

CADRAGE DES RESULTATS ET ARRONDI

EP 0 320 352 B1

# FIG_2

FIG_3

HM
HC
HB
H2
H3
MODE
HX
HY
SL
CMX

0 1 2 0 0 1 2 0 0 1 2 0 0 1 2 0 0 0 0 0

FIG_4

EP 0 320 352 B1

# FIG_5

EP 0 320 352 B1

HM

C) R1 I1 -I1 R1 R2 J2 -J2 R2 R3 J3 -J3 R3 ... R'1 J'1 -J'1 R'1 R'2

D) A1 B1 A2 B2 A3 B3 A1 B1

I) A1R1 A1I1 -B1I1 B1R1 A2R2 A2I2 -B2I2 B2R2 A3R3 A3I3 -B3I3 B3R3 A1R'1 A1I'1 -B1I'1

J) 0 0 A1R1 A1I1 ΣR ΣL ΣP ΣP ΣR ΣL ΣP ΣP ΣR ΣL 0 0 A1R'1 A1I'1

SR 0 0 A1R1 A1I1 ΣR ΣL ΣP ΣP ΣR ΣL ΣP ΣP ΣR ΣL 0 0 A1R'1

HB

RAZ

HC,HX

K)

SM

F) A1 B1 A2 B2 A3 B3 A1 B1

G) A1 B1 A2 B2 A3 B3

# FIG_6